# DEMANDE DE BREVET EUROPEEN

(11) **EP 0 847 919 A1**
(43) Date de publication de la demande: **17.06.1998**
(21) Numéro de dépôt: 97402887.0
(22) Date de dépôt: 01.12.1997
(51) Int. Cl.: B64G 1/58, B64G 1/64

(54) **Couverture thermiquement isolante pour engin spatial et engin spatial comprenant une telle couverture**

(30) Priorité: 04.12.1996 FR 9614865
(71) Demandeur: AEROSPATIALE Société Nationale Industrielle, 75781 Paris Cédex 16 (FR)
(72) Inventeur: Gioanni, Pierre, 06110 Le Cannet (FR)
(74) Mandataire: Dubois-Chabert, Guy

(57) **Abrégé**

La structure d'un engin spatial tel qu'un satellite est recouverte au moins partiellement d'une couverture thermiquement isolante obtenue en assemblant bord à bord plusieurs morceaux (14), au moyen de fermetures à glissières (16). Des fermetures à glissières (18) sont aussi utilisées pour fixer les morceaux (14) sur la structure du satellite.

## Description

### Domaine technique

L'invention concerne une couverture thermiquement isolante conçue pour être installée sur un engin spatial.

L'invention concerne également un engin spatial, tel qu'un satellite, un véhicule ou une sonde, dont la structure et/ou certains équipements intégrés sont recouverts au moins partiellement d'une telle couverture thermiquement isolante, appelée "superisolation".

### Etat de la technique

Les engins spatiaux tels que les satellites, les véhicules et les sondes comportent de nombreux instruments et circuits dont la nature dépend de la mission confiée à l'engin. Malgré le nombre souvent important des éléments qui les composent, il est essentiel que ces instruments et ces circuits fonctionnent de façon satisfaisante pendant toute la durée de la mission (généralement plusieurs années). Cependant, il s'agit souvent d'éléments fragiles dont le bon fonctionnement peut être perturbé s'ils sont soumis brutalement à des variations très importantes de température. Or, c'est précisément le régime subit par les satellites artificiels, qui passent régulièrement d'une zone d'ombre à une zone éclairée lors de leur déplacement orbital autour de la terre. Les sondes interplanétaires ainsi que les véhicules chargés du transport des satellites ou des sondes peuvent aussi subir de telles variations brusques de températures dans certaines parties de leurs trajectoires.

Afin d'atténuer ces effets et de protéger au mieux les éléments fragiles qui entrent dans la composition des instruments et des circuits embarqués sur les engins spatiaux, on a pris l'habitude d'envelopper la structure qui les entoure par une couverture thermiquement isolante. Des couvertures peuvent aussi être fixées sur la face interne de la structure principale de l'engin, et/ou sur des équipements internes de cet engin, tels que des équipements électroniques, ou autres. Généralement, chaque couverture est formée d'un empilement d'un certain nombre de feuilles en matière plastique souple et thermiquement isolante. Cette matière plastique est habituellement du "Kapton" (Marque déposée).

Pour tenir compte de la géométrie parfois relativement complexe des structures à protéger, la couverture thermiquement isolante est souvent constituée de plusieurs morceaux ou coupons, par exemple de forme rectangulaire, qui sont assemblés entre eux et fixés aux structures, lors de leur mise en place.

De plus, un démontage des différents morceaux de couverture doit être possible pour permettre jusqu'au dernier moment des interventions et des réglages sur les instruments et les circuits montés dans la structure.

Actuellement, l'assemblage et la fixation des différents morceaux de couvertures thermiquement isolantes qui recouvrent la structure des engins spatiaux sont assurés à l'aide de bandes à crochets agrippants du type bandes "Velcro" (Marque déposée).

L'utilisation de cette technique présente toutefois un certain nombre d'inconvénients.

Ainsi, lors du montage, la présentation de chacun des morceaux de la couverture thermiquement isolante nécessite beaucoup de soin. En effet, les bandes à crochets sont immédiatement agrippées l'une à l'autre dès qu'un contact se produit. Un positionnement satisfaisant nécessite donc fréquemment d'avoir recours à au moins deux opérateurs, notamment lorsque les morceaux sont de grande dimensions. Malgré les précautions prises, un positionnement très précis n'est pratiquement pas possible et il arrive fréquemment que les joints entre deux morceaux de couverture placés côte à côte baillent, ce qui conduit à un risque de déchirement de la couverture lors des manipulations ultérieures, ainsi qu'à un risque de diminution locale de l'isolation thermique, et donc à des fuites thermiques non négligeables.

Par ailleurs, lorsqu'un démontage d'un ou plusieurs morceaux s'avère nécessaire, le désaccouplement des bandes à crochets doit se faire par arrachage. Cela se traduit par un risque non négligeable de déchirement local de la couverture. De plus, étant donné que la technique actuellement utilisée ne permet pas d'effectuer la pose de façon précise, la reproductibilité du positionnement des différents morceaux lors de leur remontage est très mauvaise.

Enfin, l'utilisation de bandes à crochets agrippants se traduit par un encombrement non négligeable des zones de liaison entre les différents morceaux qui constituent la couverture thermiquement isolante.

### Exposé de l'invention

L'invention a principalement pour objet une couverture thermiquement isolante pour engin spatial, formée de plusieurs morceaux dont l'assemblage est réalisé de façon telle que la mise en place de la couverture puisse être faite très simplement par un seul opérateur, de façon précise et reproductible et sans risque de bâillement, et de façon telle qu'un ou plusieurs morceaux puissent être démontés et remontés sans risque de déchirement, l'encombrement des joints étant par ailleurs sensiblement réduit par rapport à l'état de la technique.

Selon l'invention, ce résultat est obtenu au moyen d'une couverture thermiquement isolante pour engin spatial, formée de plusieurs morceaux assemblés entre eux par des moyens de liaison, caractérisée par le fait que les moyens de liaison sont des fermetures à glissières.

Chaque fermeture à glissière peut notamment être actionnée par un curseur démontable en fin de course.

De préférence, les différents morceaux sont assemblés bord à bord, de telle sorte que leurs rebords adjacents se recouvrent et qu'au moins une fermeture à glissière soit interposée entre eux.

Afin d'assurer une redondance, deux fermetures à glissières sensiblement parallèles l'une à l'autre peuvent être interposées entre les rebords qui se recouvrent.

Habituellement, chaque fermeture à glissière comprend deux pistes fixées respectivement aux rebords adjacents des morceaux assemblés, ces pistes étant complémentaires de façon à pouvoir s'emboîter et se déboîter.

Avantageusement, des lacets de maintien traversent des trous formés dans les rebords adjacents desdits morceaux, à proximité des extrémités de la fermeture à glissière, les trous étant protégés par des oeillets.

L'invention concerne également un engin spatial dans lequel au moins une structure (telle que la structure principale de l'engin et/ou des équipements internes) est recouverte au moins partiellement par une couverture thermiquement isolante formée de plusieurs morceaux assemblés entre eux par des moyens de liaison et fixés à la structure par des moyens de fixation, caractérisé par le fait que les moyens de liaison et les moyens de fixation sont des fermetures à glissières.

Chaque fermeture à glissière est de préférence conçue pour être actionnée par un curseur démontable en fin de course.

En outre, chacune des fermetures à glissières qui assurent la fixation d'un morceau sur la structure comprend deux pistes fixées respectivement sur le morceau et sur la structure, ces pistes étant complémentaires de façon à pouvoir s'emboîter et se déboîter.

### Brève description des dessins

On décrira à présent, à titre d'exemple non limitatif, une forme de réalisation préférentielle de l'invention, en se référant aux dessins annexés, dans lesquels :
- la figure 1 est une vue en perspective qui représente de façon schématique un satellite artificiel dont au moins la structure principale est recouverte d'une couverture thermiquement isolante conforme à l'invention ;
- la figure 2 est une vue en perspective illustrant plus en détail l'assemblage bord à bord de deux morceaux de la couverture thermiquement isolante de la figure 1 ;
- la figure 3 est une vue en perspective comparable à la figure 2 illustrant une variante de réalisation ; et
- la figure 4 est une vue en perspective illustrant plus en détail la fixation de l'un des morceaux de la couverture thermiquement isolante sur une structure du satellite de la figure 1 .

### Exposé détaillé d'une forme de réalisation préférentielle

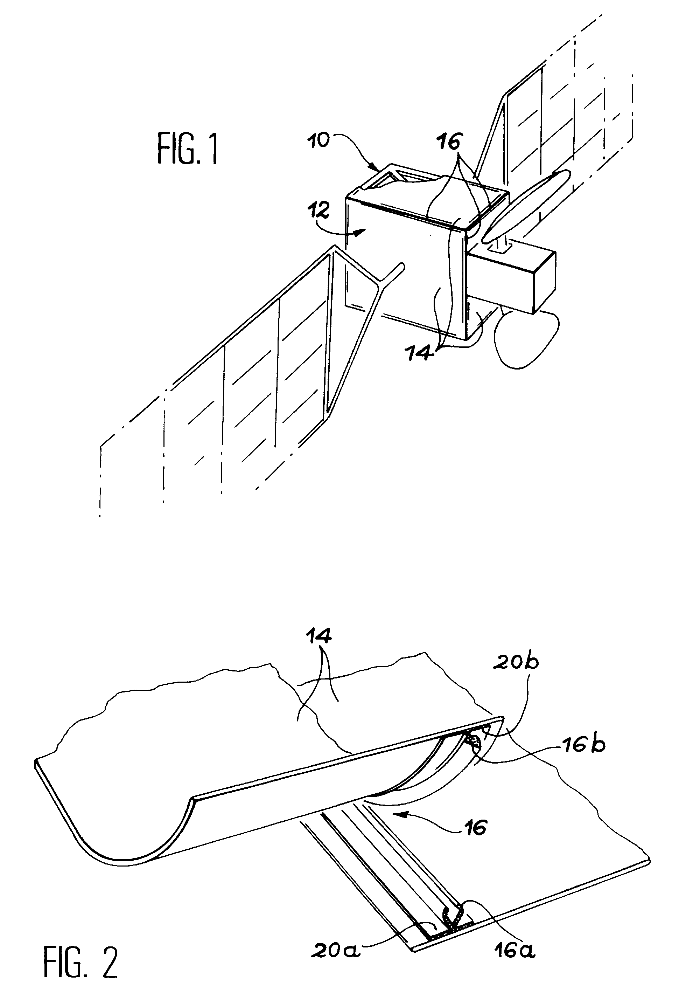

Comme on l'a représenté très schématiquement sur la figure 1, un satellite artificiel comprend habituellement une structure rigide 10 qui supporte et entoure les différents instruments, appareillages et circuits (non représentés) embarqués sur le satellite.

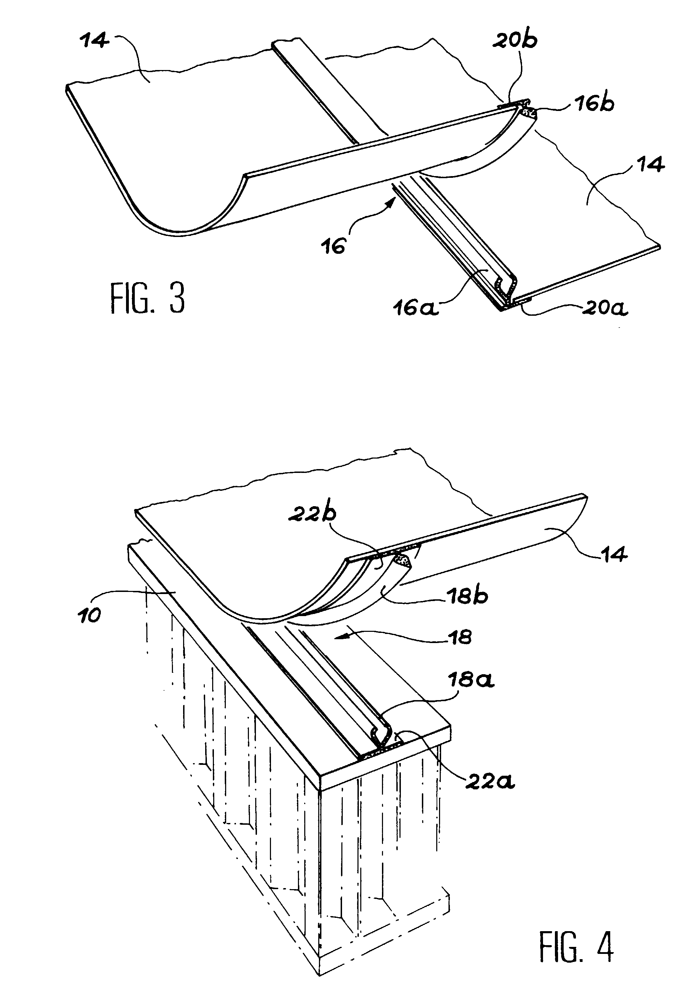

Pour assurer la protection thermique de ces instruments, appareillages et circuits, la structure 10 du satellite et certains des instruments intégrés peuvent être enveloppés au moins partiellement d'une couverture 12 thermiquement isolante. Cette couverture est constituée d'un empilement d'un grand nombre de feuilles d'une matière plastique souple et thermiquement isolante telle que du "Kapton" (Marque déposée). Pour des raisons pratiques, la couverture 12 est formée de plusieurs morceaux, ou coupons 14 assemblés les uns aux autres par des moyens de liaison. Conformément à l'invention, ces moyens de liaison sont constitués par des fermetures à glissières 16. Par ailleurs, les panneaux 14 sont fixés sur la structure 10 du satellite par des moyens de fixation. Conformément à l'invention, ces moyens de fixation sont également constitués par des fermetures à glissières 18 (figure 4).

Les fermetures à glissières 16 et 18 peuvent être réalisées selon différentes techniques sans sortir du cadre de l'invention.

Dans les formes de réalisation illustrées sur les figures 2 à 4, les fermetures à glissières 16 et 18 sont des fermetures en matière plastique qui comprennent deux pistes de formes complémentaires, mâles et femelles aptes à s'emboîter et à se déboîter.

Dans le cas des fermetures à glissières 16 servant à assembler les morceaux 14 de la couverture 12, chaque fermeture comprend une première piste femelle 16a à section en forme de U ou de V dont les bords sont refermés et une deuxième piste mâle 16b à section en forme de bourrelet apte à s'emboîter dans le U ou le V formé en section par la piste 16a, pour y être maintenue (figures 2 et 3).

Chacune des pistes 16a et 16b est montée respectivement sur une bande souple 20a et 20b, servant à la fixation des pistes sur les morceaux 14 de couverture à assembler (les pistes mâle et femelle peuvent, bien entendu, être inversées).

Comme l'illustre en particulier la figure 2, les bandes 20a et 20b portant les pistes 16a et 16b des fermetures 16 assurant la liaison des morceaux 14 voisins sont fixées sur ces morceaux de façon telle qu'ils soient assemblés bord à bord. Plus précisément, les bandes 20a et 20b sont fixées sur les rebords des morceaux 14 qui doivent être assemblés, par tout moyen approprié tel que par collage, soudage, etc.. Ainsi, lorsque l'assemblage des morceaux 14 est réalisé, les rebords adjacents de ces morceaux se recouvrent et la fermeture à glissière 16 est interposée entre eux.

Dans une variante de réalisation non représentée, un assemblage redondant des morceaux 14 peut être assuré en utilisant deux fermetures à glissières 16 juxtaposées, disposées sensiblement parallèlement l'une à l'autre. Ces deux fermetures à glissières sont alors interposées entre les rebords des morceaux 14 qui se recouvrent.

Dans une variante de réalisation illustrée sur la figure 3, les bandes 20a et 20b portant les deux pistes 16a et 16b de la fermeture à glissière sont fixées aux extrémités des morceaux 14 à raccorder de façon telle que les pistes 16a et 16b soient situées au-delà du bord de chacun de ces morceaux. La fixation des bandes 20a et 20b sur les morceaux 14 est assurée par ailleurs de la même manière que sur la figure 2, c'est-à-dire par tout moyen approprié tel que par collage, soudage, etc..

Dans la forme de réalisation représentée sur la figure 4, les fermetures à glissière 18 utilisées pour fixer les morceaux 14 de la couverture 12 sur la structure 10 du satellite sont identiques aux fermetures à glissières 16 utilisées pour assembler entre eux les morceaux 14.

Ainsi, chacune des fermetures à glissière 18 comprend une première piste femelle 18a à section en forme de U ou de V dont les bords sont refermés et une deuxième piste mâle 18b à section en forme de bourrelet apte à s'emboîter dans la première piste 18a, pour y être maintenue (figure 4).

Chacune des pistes 18a et 18b est montée respectivement sur une bande souple 22a et 22b servant à la fixation des pistes d'une part sur les morceaux 14 et d'autre part sur la structure 10, ou inversement.

Plus précisément, la fixation de chacun des morceaux 14 de la couverture thermiquement isolante sur la structure 10 du satellite est réalisée de telle sorte que l'une des bandes 22a et 22b portant les pistes 18a et 18b de la fermeture à glissière 18 soit fixée sur la structure 10 alors que l'autre bande est fixée sur le morceau 14 considéré. La fixation des bandes 22a et 22b est assurée comme précédemment par tout moyen approprié tel que par collage, soudage, etc.. Dans la forme de réalisation représentée sur la figure 4, la bande 22a est fixée sur une face de la structure 10 tournée vers l'extérieur alors que la bande 22b est fixée sur un morceau 14 de la couverture, le long d'un des bords de ce morceau.

L'emboîtement des deux pistes 16a et 16b des fermetures à glissières 16 et des deux pistes 18a et 18b des fermetures à glissières 18 peut être effectué directement par simple pression. Toutefois, on utilise de préférence à cet effet un curseur (non représenté) démontable en fin de course. Dans ce cas, un seul curseur ou un nombre réduit de curseurs peut être utilisé pour assurer l'assemblage et la fixation de tous les morceaux 14 constituant la couverture thermiquement isolante 12.

La description qui précède montre que les fermetures à glissières 16 et 18 peuvent être intégrées très aisément à la couverture thermiquement isolante 12 pour assurer l'assemblage des différents morceaux 14 qui la constituent ainsi que la fixation de ces morceaux sur la structure 10 du satellite.

Le recours à des fermetures 16 et 18 pour assurer l'assemblage et la fixation des morceaux 14 assure un positionnement précis et parfaitement reproductible de ces morceaux l'un par rapport à l'autre ainsi que par rapport à la structure 10 du satellite. Le caractère reproductible du positionnement est appréciable lorsqu'un démontage d'un ou plusieurs des morceaux 14 est nécessaire lors de la fabrication du satellite.

Par ailleurs, l'assemblage peut être aisément réalisé par une seule personne sans risque d'endommager la couverture ou de créer des zones susceptibles d'amoindrir localement les propriétés thermiquement isolantes de la couverture.

Le démontage de certains morceaux de la couverture peut aussi être effectué sans risque de déchirement si cela s'avère nécessaire lors de la fabrication du satellite.

En outre, il est à noter que l'encombrement des fermetures à glissières est très faible par rapport à celui des bandes à crochets agrippants.

On observera que les morceaux 14 de la couverture 12 peuvent être de formes diverses sans sortir du cadre de l'invention. Avantageusement, les bords des morceaux à assembler sont rectilignes, pour faciliter l'implantation des fermetures à glissières 16.

Afin d'éviter tout risque d'ouverture intempestive d'une fermeture à glissière servant à fixer l'un à l'autre deux morceaux de couverture, il est possible d'adjoindre à la fermeture à glissière des lacets de maintien reliant les morceaux de couverture à proximité des extrémités de la fermeture. Chaque lacet traverse alors deux trous en vis-à-vis formés dans les rebords adjacents des morceaux considérés. Les trous sont avantageusement protégés par des oeillets empêchant toute déchirure.

Comme on l'a déjà noté, la couverture conforme à l'invention peut être utilisée aussi bien pour assurer la protection thermique de la structure principale d'un engin spatial que pour assurer la protection thermique d'un équipement (électronique ou autre) placé à l'intérieur de l'engin. De plus, la protection de la structure peut être partielle ou totale. De ce point de vue, le terme "couverture" désigne tout revêtement de protection thermique formé de deux morceaux ou plus, assemblés l'un à l'autre.

## Revendications

1. Couverture (12) thermiquement isolante pour engin spatial, formée de plusieurs morceaux (14) assemblés entre eux par des moyens de liaison (16), caractérisée par le fait que les moyens de liaison sont des fermetures à glissières (16).

2. Couverture selon la revendication 1, dans laquelle chaque fermeture à glissière (16) est apte à être actionnée par un curseur démontable en fin de course.

3. Couverture selon l'une quelconque des revendications 1 et 2, dans laquelle les morceaux (14) sont assemblés bord à bord, de telle sorte que leurs rebords adjacents se recouvrent et qu'au moins une fermeture à glissière (16) soit interposée entre eux.

4. Couverture selon la revendication 3, dans laquelle deux fermetures à glissières (16), sensiblement parallèles l'une à l'autre, sont interposées entre les rebords qui se recouvrent.

5. Couverture selon l'une quelconque des revendications 3 et 4, dans laquelle chaque fermeture à glissière (16) comprend deux pistes (16a,16b) fixées respectivement aux rebords adjacents des morceaux (14) assemblés, ces pistes étant complémentaires de façon à pouvoir s'emboîter et se déboîter.

6. Couverture selon l'une quelconque des revendications 3 et 5, dans laquelle des lacets de maintien traversent des trous formés dans les rebords adjacents desdits morceaux (14), à proximité des extrémités de la fermeture à glissière (16), les trous étant protégés par des oeillets.

7. Engin spatial comprenant au moins une structure (10) recouverte au moins partiellement par une couverture (12) thermiquement isolante, formée de plusieurs morceaux (14) assemblés entre eux par des moyens de liaison (16) et fixés à la structure (10) par des moyens de fixation (18), caractérisé par le fait que les moyens de liaison et les moyens de fixation sont des fermetures à glissières (16,18).

8. Engin spatial selon la revendication 7, dans lequel chaque fermeture à glissière (16,18) est apte à être actionnée par un curseur démontable en fin de course.

9. Engin spatial selon l'une quelconque des revendications 7 et 8, dans lequel chaque fermeture à glissière (18) assurant la fixation d'un morceau (14) sur la structure (10) comprend deux pistes (18a,18b) fixées respectivement sur le morceau et sur la structure, ces pistes étant complémentaires de façon à pouvoir s'emboîter et se déboîter.
